# EUROPÄISCHE PATENTSCHRIFT

(11) **EP 1 565 974 B1**
(45) Veröffentlichungstag und Bekanntmachung des Hinweises auf die Patenterteilung: **10.11.2010**
(21) Anmeldenummer: 03785656.4
(22) Anmeldetag: 24.11.2003
(51) Int. Cl.: H02H 9/04

(54) **SCHALTUNGSANORDNUNG ZUM SCHUTZ INTEGRIERTER SCHALTUNGEN VOR ELEKTROSTATISCHEN ENTLADUNGEN**
CIRCUIT FOR PROTECTING INTEGRATED CIRCUITS AGAINST ELECTROSTATIC DISCHARGES
CIRCUIT SERVANT A PROTEGER DES CIRCUITS INTEGRES CONTRE LES DECHARGES ELECTROSTATIQUES

(30) Priorität: 26.11.2002 DE 10255130
(43) Veröffentlichungstag der Anmeldung: 24.08.2005
(73) Patentinhaber: Infineon Technologies AG, 85579 Neubiberg (DE)
(72) Erfinder: ESMARK, Kai, 82061 Neuried (DE); GOSSNER, Harald, 85521 Riemerling (DE); STADLER, Wolfgang, 80538 München (DE); STREIBL, Martin, 85238 Petershausen (DE); WENDEL, Martin, 85662 Hohenbrunn (DE)
(74) Vertreter: Banzer, Hans-Jörg
(86) Internationale Anmeldenummer: PCT/EP2003/013179
(87) Internationale Veröffentlichungsnummer: WO 2004/049536

(56) Entgegenhaltungen:
- US-A- 5 719 737

## Beschreibung

Die vorliegende Erfindung betrifft eine Schaltungsanordnung zum Schutz integrierter Schaltungen (ICs) vor elektrostatischen Entladungen (ESD, Electrostatic Discharge) oder elektrischer Überbeanspruchung (EOS, Electrical OverStress), welche insbesondere einen gegenüber einer herkömmlichen ESD-Schutzschaltung erweiterten möglichen Spannungsbereich in einem Normalbetrieb der integrierten Schaltung aufweist.

Der Schutz vor elektrostatischen Entladungen ist nahezu unabdingbar für moderne integrierte Schaltungen. Zu diesem Zweck enthalten derartige ICs spezielle Schutzschaltungen, welche an einem Eingang der Schaltung beispielsweise durch Berührung durch einen Menschen auftretende elektrostatische Entladungen auf eine Versorgungsspannung, beispielsweise auf Masse, ableiten.

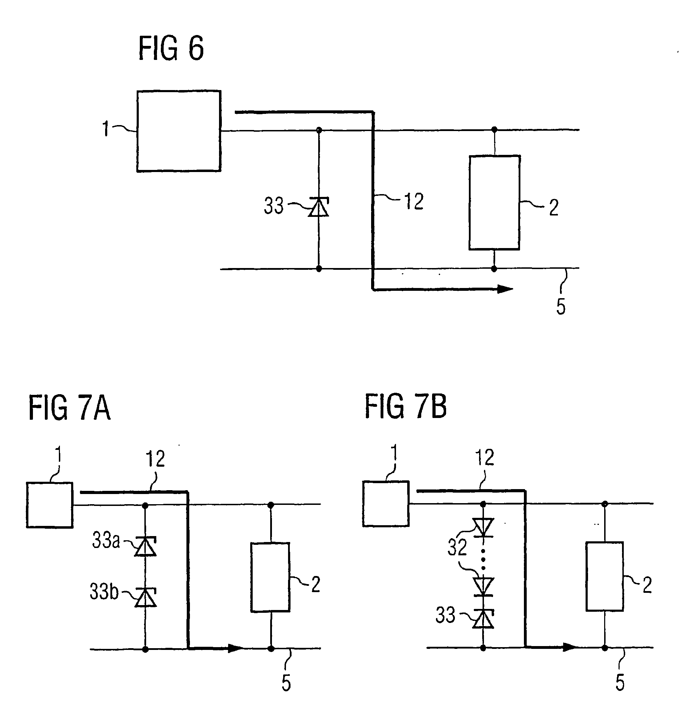

Eine derartige Anordnung ist schematisch in Figur 6 dargestellt. Dabei soll der Schaltungsteil 2 einer integrierten Schaltung vor an einem Anschluss 1, beispielsweise einem I/O-Pad, anliegenden ESD-Pulsen oder EOS-Ereignissen geschützt werden. Zu diesem Zweck ist zwischen den Anschluss 1 und eine Masseleitung (GND) 5 ein ESD-Schutzelement 33 geschaltet. Anstatt der Masseleitung 5 kann auch eine andere Versorgungsspannungsleitung, beispielsweise eine positive Versorgungsspannung VDD, gewählt werden, zudem kann ein Schutzpfad zwischen einer positiven Versorgungsspannung und der Masse analog betrachtet werden. Im Folgenden wird lediglich auf einen Schutzpfad zwischen einem Eingang bzw. Ausgang und der Masse explizit eingegangen, für die anderen genannten Möglichkeiten gilt das Folgende analog. Bei dem ESD-Schutzelement handelt es sich um ein Bauelement, welches in einem Normalbetrieb der Schaltung ein Sperrverhalten aufweist, beim Überschreiten einer kritischen Spannung U_{c}, wie sie beispielsweise bei ESD- oder EOS-Ereignissen auftritt, jedoch niederohmig wird. Somit werden entsprechende ESD/EOS-Pulse auf die Masse abgeleitet, wie durch den Pfeil 12 angedeutet. Beispiele für derartige Bauelemente sind Zenerdioden oder entsprechend verschaltete MOS-Bauelemente.

Zumeist ist ein derartiges ESD-Schutzelement 33 im Normalbetrieb des Bausteins, also im nichtleitenden Zustand, nur für einen bestimmten Spannungsbereich zugelassen. Ein Betrieb über längere Zeit außerhalb dieses Spannungsbereichs ist aus Zuverlässigkeitsgründen nicht erlaubt. Dies bedeutet für die in Figur 6 gezeigte Anordnung eine Einschränkung des erlaubten Signalspannungsbereichs am Anschluss 1 und damit eine Einschränkung der Funktionalität der zu schützenden Schaltung.

Weiterhin sinkt die zulässige Betriebsspannung der Bauelemente und somit auch der ESD-Schutzelemente mit jeder neuen Technologiegeneration. Die Signalbereiche von Standard-I/O-Schnittstellen wie beispielsweise PCI oder USB bleiben dagegen über mehrere Generationen erhalten. Somit müssen beispielsweise auch in einer 1,5V CMOS-Technologie 3,3V-Schnittstellen zur Verfügung gestellt werden.

Eine Möglichkeit zur Lösung dieses Problems besteht darin, mehrere Schutzelemente in Serie zu schalten, um einen niedrigeren Spannungsabfall am Einzelelement zu erreichen. Beispiele hierfür sind in Figur 7 dargestellt. Dabei zeigt Figur 7A eine Serienschaltung von zwei ESD-Schutzelementen 33a und 33b, so dass der Spannungsabfall an jedem einzelnen ESD-Schutzelement im Vergleich zu der in Figur 6 gezeigten Schaltung verringert wird. Im Figur 7B soll eine Reduktion der am ESD-Schutzelement 33 abfallenden Spannung durch eine oder mehrere Diodeneinsatzspannungen von Dioden 32 erreicht werden. Die dabei zum Einsatz gebrachten Dioden können bipolare pn- oder auch CMOS-Dioden sein. Darüber hinaus lässt sich das im Folgenden dargelegte Konzept auch auf eine Serienschaltung mit CMOS- oder Bipolartransistoren übertragen.

Bei derartigen Ansätzen mit in Serie geschalteten Einzelelementen ergibt sich das Problem, dass eine effektive Aufteilung des gesamten Spannungsabfalls auf die Einzelelemente der Schutzschaltung nur bei einem definierten Stromfluss, beispielsweise zur Einstellung eines Arbeitspunktes der Dioden 32 in der Serienschaltung, garantiert werden kann. Bei der Serienschaltung von Dioden 32 mit einem NMOS-basierten Schutzelement 33 beträgt beispielsweise der "natürliche" Leckstrom typischerweise lediglich zwischen 1nA und 1µA, was zu einem Spannungsabfall von nur wenigen 10mV oder 100mV pro Diodenschwelle führt. Somit wird der Spannungsabfall am Schutzelement 33 nur unwesentlich reduziert, so dass eine Gefahr der Schädigung oder Degradation des Schutzelements im Normalbetrieb der Schaltung, d.h. im Sperrmodus der ESD-Elemente, besteht, im Fall eines NMOS-basierten Schutzelements beispielsweise durch Gefährdung des Gateoxids.

Eine weitere ESD-Schutzanordnung für integrierte Schaltungen, welche verschiedene Betriebsspannungen tolerieren kann, ist aus der US-A-5,719,737 bekannt. Diese Schutzanordnung ist speziell für den Schutz einer Stromversorgung der integrierten Schaltung konzipiert. Die dort offenbarte Schaltungsanordnung verwendet einen Spannungsteiler, um die an einem ESD-Schutzelement abfallende Spannung zu reduzieren.

Es ist Aufgabe der vorliegenden Erfindung, eine ESD-Schutzschaltungsanordnung für integrierte Schaltungen bereitzustellen, welche auch höhere Betriebsspannungen toleriert und insbesondere auch für Signaleingänge oder -ausgänge der Schaltung genutzt werden kann und welche mit einfachen Mitteln realisierbar ist.

Diese Aufgabe wird erfindungsgemäß durch eine Schaltungsanordnung mit den Merkmalen des Anspruchs 1 gelöst. Die Unteransprüche definieren vorteilhafte oder bevorzugte Ausführungsbeispiele der Erfindung.

Erfindungsgemäß wird vorgeschlagen, dass parallel zu einem ESD-Schutzelement ein Strompfad geschaltet ist, welcher ein den Strom durch diesen Strompfad begrenzendes Schaltungselement umfasst. Durch diesen zusätzlichen Strompfad kann das ESD-Schutzelement vor schädlichen Signal- oder Versorgungsspannungen im Normalbetrieb des ICs geschützt werden, während die ESD-Schutzwirkung des ESD-Schutzelements weiterhin ohne Einschränkung besteht.

Bevorzugt sind zu dieser Parallelschaltung weitere Schutzelemente in Serie geschaltet, zum Beispiel Dioden. Diese werden aufgrund des Strompfads auch in einem Normalbetrieb der integrierten Schaltung, in welchem das ESD-Schutzelement der Parallelschaltung sperrt, von einem geringen Leckstrom durchflossen und weisen somit einen definierten Spannungsabfall auf. Durch diese Maßnahme kann der Spannungsabfall an dem ESD-Schutzelement der Parallelschaltung vermindert werden. Es werden also durch den zusätzlich eingefügten Leckstrompfad (bzw. Querstrompfad) die Potentiale innerhalb der ESD-Schutzschaltung definiert.

Insbesondere kann durch eine erfindungsgemäße Schaltungsanordnung der zulässige Spannungsbereich für eine I/O-Schaltung vorteilhaft erweitert werden. Der dabei über den Strompfad fließende relativ geringe Leckstrom ist unproblematisch.

Der Strompfad kann insbesondere schaltbar gestaltet werden, so dass er nur aktiviert wird, wenn eine für das ESD-Schutzelement nicht tolerierbare Spannung an dem entsprechenden Eingang oder Ausgang der integrierten Schaltung anliegt. Dafür kann ein elektronisch steuerbares Schaltmittel, beispielsweise ein Transistor, oder eine Ansteuerschaltung vorgesehen sein, welche den Strompfad öffnet, sobald eine bestimmte, auf Bausteinebene vorhandene Vergleichsspannung überschritten wird, im einfachsten Fall die positive Versorgungsspannung.

Die Erfindung wird im Folgenden unter Bezugnahme auf die beigefügte Zeichnung näher erläutert. Es zeigen:
Fig. 1 ein erfindungsgemäßes Ausführungsbeispiel, wobei Fig. 1A und Fig. 1B zwei mögliche Alternativen des Ausführungsbeispiels darstellen,
Fig. 2A ein Ausführungsbeispiel ähnlich dem aus Fig. 1A, an dem Schaltungssimulationen durchgeführt wurden, deren Ergebnisse in Fig. 2B und Fig. 2C dargestellt sind,
Fig. 3 ein zweites erfindungsgemäßes Ausführungsbeispiel,
Fig. 4A ein Ausführungsbeispiel ähnlich dem aus Fig. 3, an dem Schaltungssimulationen durchgeführt wurden, deren Ergebnisse in Fig. 4B und Fig. 4C dargestellt sind,
Fig. 5A ein drittes erfindungsgemäßes Ausführungsbeispiel, an dem Schaltungssimulationen durchgeführt wurden, deren Ergebnisse in Fig. 5B und Fig. 5C dargestellt sind,
Fig. 6 eine schematische Darstellung einer einfachen ESD-Schaltungsanordnung gemäß dem Stand der Technik und
Fig. 7A und Fig. 7B ESD-Schaltungsanordnungen mit mehreren Schutzelementen gemäß dem Stand der Technik.

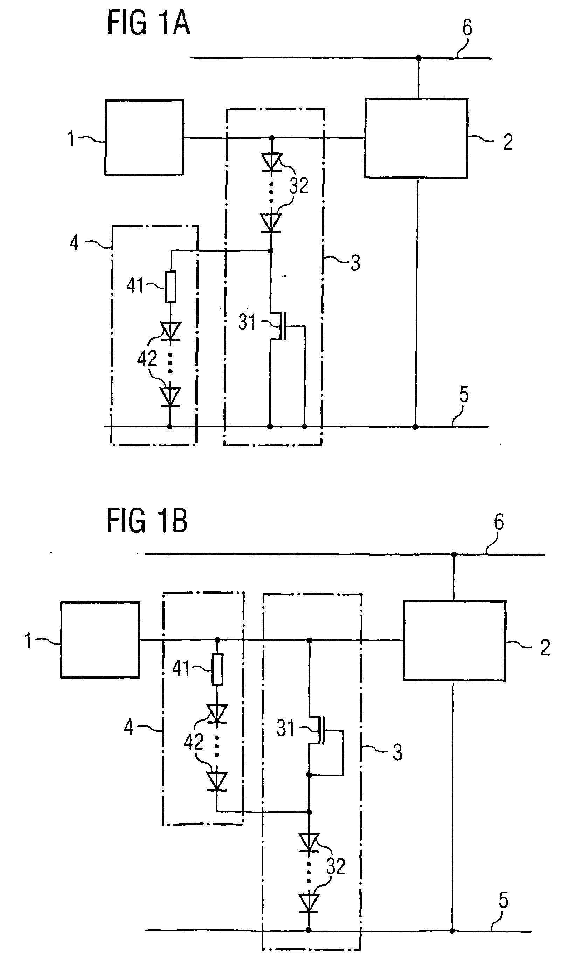

In Figur 1A ist ein Eingabe/Ausgabe(I/O)-Schaltungsteil 2 einer integrierten Schaltung dargestellt, welche über einen I/O-Anschluss 1 Signale empfängt oder sendet und über eine positive Versorgungsspannungsleitung 6 und eine Masseleitung 5 mit Strom versorgt wird. Der I/O-Schaltungsteil 2 enthält Elemente, beispielsweise empfindliche Gateoxide, welche vor an dem I/O-Anschluss 1 anliegenden elektrostatischen Entladungen (ESD) oder elektrischer Überbeanspruchung (EOS) geschützt werden sollen. Der I/O-Schaltungsteil 2 kann mit dem Rest der integrierten Schaltung über nicht dargestellte weitere Leitungen kommunizieren.

Zum Schutz vor ESD- oder EOS-Ereignissen ist zwischen den I/O-Anschluss 1 und der Masseleitung 5 ein ESD-Schutzpfad 3 geschaltet. Dieser Schutzpfad besteht im vorliegenden Ausführungsbeispiel aus einem NMOS-Schutzelement 31 und einer oder mehreren zu diesem in Serie geschalten ESD-Dioden 32, wobei das diodenseitige Ende der Serienschaltung mit dem I/O-Anschluss 1 und das NMOS-seitige Ende der Serienschaltung mit der Masseleitung 5 verbunden ist. Die ESD-Dioden 32 können in einer modernen CMOS-Technologie z.B. durch p+-Diffusion in einer n-Wanne realisiert werden.

Die Dimensionierung der ESD-Dioden 32 muss dabei derart sein, dass sie einerseits eine ausreichende ESD-Festigkeit aufweisen, um einen ESD-Strom ableiten zu können. Andererseits müssen die ESD-Dioden 32 einen ausreichend niedrigen Hochstromwiderstand (wenige Ohm, idealerweise <1-2Ω) aufweisen, um einen möglichst geringen Spannungsabfall im ESD-Fall zu erzeugen und so eine bestmögliche Spannungsbegrenzung über dem zu schützenden I/O-Schaltungsteil 2 zu gewährleisten. Die Weite des p-n-Übergangs derartiger Dioden wird typischerweise in der Größenordnung 100µm liegen.

Das NMOS-Schutzelement 31 weist einen zulässigen Spannungsbereich auf, welcher unterhalb demjenigen liegen kann, welcher für den I/O-Anschluss vorgesehen ist. Parallel zu dem NMOS-Schutzelement ist ein Strompfad 4 geschaltet, welcher aus einem Widerstand 41, welcher bevorzugt einen Widerstand zwischen 1kΩ und 100kΩ aufweist, und Dioden 42, bevorzugt Dioden minimaler Abmessung, besteht.

In einem Normalbetrieb der Schaltung, in dem das NMOS-Schutzelement sperrt, fließt ein begrenzter Leckstrom durch die ESD-Dioden 32 und den Strompfad 4. Damit fällt in den ESD-Dioden 32 eine Spannung ab, welche die an dem NMOS-Schutzelement 31 abfallende Spannung deutlich verringert und somit die Spannungstoleranz der gesamten Anordnung erhöht.

In diesem und in den folgenden Ausführungsbeispielen ist die ESD-Schutzschaltungsanordnung jeweils zwischen einem I/O-Anschluss und einer Masseleitung geschaltet, analog kann sie auch zwischen einen I/O-Anschluss und eine insbesondere positive Versorgungsspannung oder beispielsweise auch zwischen eine positive Versorgungsspannung und eine Masseleitung geschaltet sein. Dies bedeutet, dass nicht nur Signalanschlüsse, sondern beispielsweise auch Anschlüsse zur Spannungsversorgung der integrierten Schaltung, mit einer erfindungsgemäßen Schutzschaltung vor ESD- und EOS-Ereignissen versehen werden können, also allgemein alle Anschlüsse der integrierten Schaltung. Zudem ist die Schaltungsanordnung nicht auf NMOS-Schutzelemente wie in den Ausführungsbeispielen begrenzt, sondern ist auf alle ESD-Schutzelemente, insbesondere solche, die nur in einem beschränkten Spannungsbereich betrieben werden können, anwendbar. Mögliche ESD-Schutzelemente sind beispielsweise auch PMOS-Schutzelemente, Bipolartransistoren, auch parasitäre Bipolartransistoren, wie sie z.B. im Unterbau von NMOS- oder PMOS-Bauelementen auftreten können, oder Thyristoren, z.B. sogenannte Silicon Controlled Rectifiers (SCRs).

In Figur 1B ist eine Variante gezeigt, welche sich von dem in Figur 1A gezeigten Ausführungsbeispiel durch die vertauschte Reihenfolge des NMOS-Schutzelements 31 und der ESD-Dioden 32 unterscheidet. Beide Anordnungen sind prinzipiell möglich. Die in Figur 1A gezeigte Anordnung begrenzt den Spannungsabfall über alle Übergänge des NMOS-Schutzelements 32, während in der in 1B gezeigten Anordnung eine häufig in derartigen Schutzelementen vorhandene parasitäre Diode, z.B. zwischen Drain und Wanne, für den ESD-Schutz aktiv mitzubenutzt wird, da in diesem Fall das NMOS-Schutzelement direkt mit dem I/O-Anschluss 1 verbunden ist. Zu beachten ist dabei, dass der Bulk derartiger NMOS-Bauelemente in der Praxis ebenfalls auf Masse liegt.

Für die folgenden Ausführungsbeispiele wird jeweils nur die Anordnung analog der Figur 1A gezeigt, es ist jedoch jeweils auch eine Anordnung analog der Figur 1B möglich.

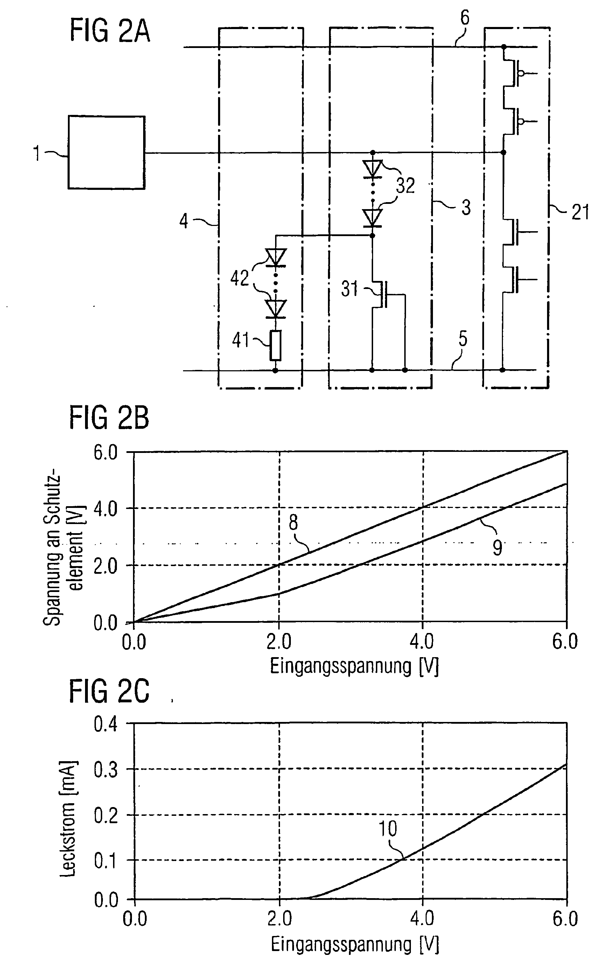

In Figur 2A ist ein Ausführungsbeispiel analog dem in Figur 1A gezeigten dargestellt, mit dem Unterschied, dass statt des I/O-Schaltungsteils 2 nun ein I/O-Schaltungsteil 21, welches mehrere MOS-Bauelemente umfasst, dargestellt ist. Für diese Schaltungsanordnung wurden Simulationen zur Ermittlung der am NMOS-Schutzelement 31 anliegenden Spannung und des durch den Strompfad 4 fließenden Leckstroms in Abhängigkeit von einer an dem I/O-Anschluss anliegenden Eingangsspannung durchgeführt, der Widerstand 41 betrug dabei 10kΩ.

Dabei zeigt Figur 2B den Spannungsabfall am NMOS-Schutzelement in Abhängigkeit von der Eingangsspannung ohne (Kurve 8) und mit (Kurve 9) Vorhandensein des Strompfads 4. Wie deutlich zu sehen ist, wird die anliegende Spannung mit einem Leckstrompfad gegenüber dem Fall ohne Leckstrompfad bei Eingangsspannungen größer als ca. 2V um etwa 1V reduziert, dies entspricht den zwei Diodenschwellen der ESD-Dioden 32.

In Figur 2C ist das Ergebnis der Simulation für den Leckstrom durch den Strompfad 4 in Abhängigkeit von der Eingangsspannung dargestellt (Kurve 10). Durch die Diodenschwellen der Dioden 42 tritt erst für Spannungen >2V ein signifikanter Leckstrom auf, welcher in dem untersuchten Spannungsbereich Werte bis zu einigen 100µA erreicht. Die Größe des Leckstroms kann durch Optimierung des Widerstandswertes des Widerstands 41 und die Anzahl der Dioden 42 optimiert werden.

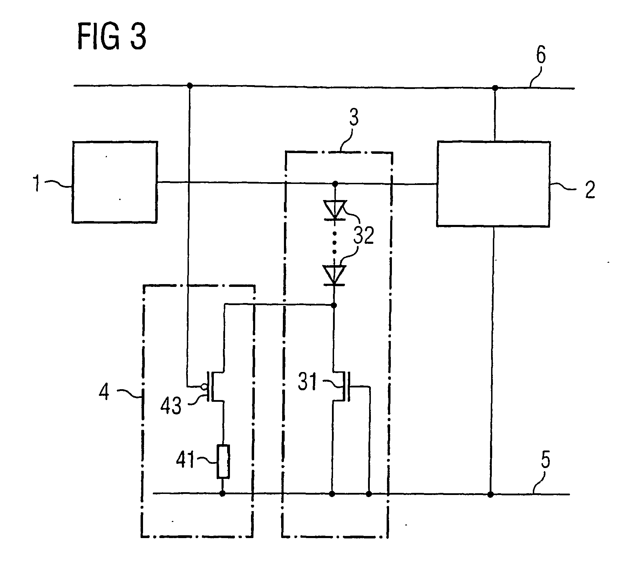

Ein weiteres erfindungsgemäßes Ausführungsbeispiel ist in Figur 3 dargestellt. Im Vergleich zu Figur 1A wurde lediglich der Strompfad 4 verändert, die übrigen Teile der Schaltung sind unverändert.

Der Strompfad 4 in Figur 3 besteht aus einem Widerstand 41 und einem PMOS-Bauelement 43, bevorzugt ein Bauelement minimaler Abmessung (Minimal-PMOS), welches ein mit der positiven Versorgungsspannungsleitung 6 verbundenes Gate aufweist. Dieses PMOS-Bauelement 43 bewirkt, dass nur dann ein Leckstrom über den Strompfad fließen kann, wenn die Spannung am I/O-Anschluss die positive Versorgungsspannung um einen kritischen Wert, welcher durch die Zahl der ESD-Dioden 32 und die PMOS-Einsatzspannung bestimmt ist, übersteigt. Durch diese Schaltungsanordnung wird der Leckstrom erst in einem Bereich aktiviert, in dem ein für das NMOS-Schutzelement 31 schädlicher Spannungsabfall vorliegen würde. Bei kleineren Spannungen ist der Leckstrompfad inaktiv und störende Leckströme sind unterdrückt.

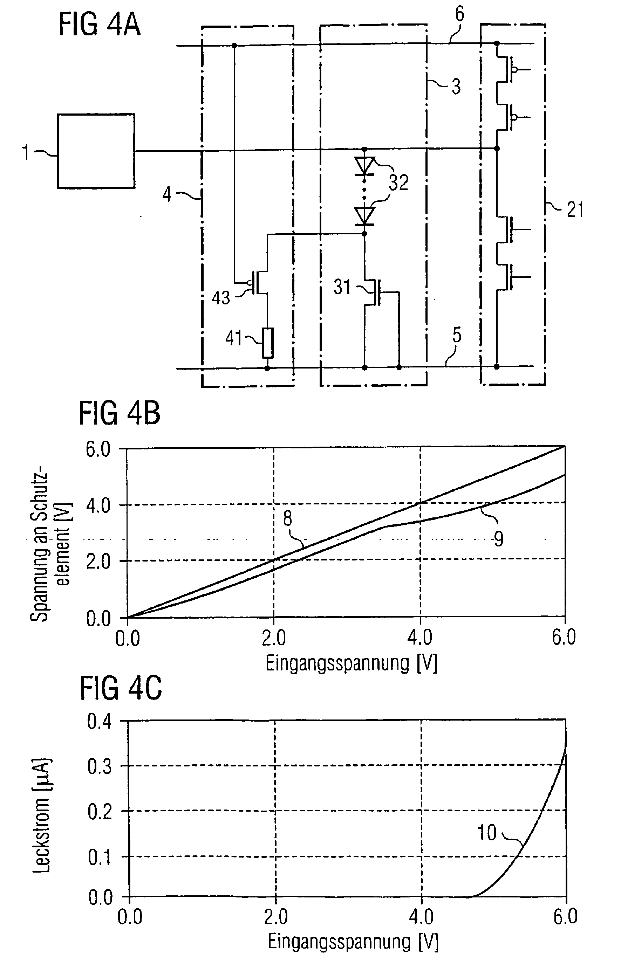

Dieses Verhalten wurde wiederum mit Hilfe einer Schaltungssimulation nachgewiesen, welche in Figur 4 dargestellt ist. Dabei zeigt Figur 4A ein erfindungsgemäßes Ausführungsbeispiel analog dem in Figur 3 gezeigten, wobei statt dem Schaltungsteil 2 ein Schaltungsteil 21, welches mehrere MOS-Bauelemente umfasst, dargestellt ist. Der Widerstand 41 für die Simulation betrug wiederum 10kΩ.

Die Darstellungen in den Figuren 4B und 4C sind analog zu denen der Figuren 2B und 4C und zeigen Ergebnisse der an der in Figur 4A dargestellten Schaltungsanordnung durchgeführten Simulation. In Figur 4B ist die am NMOS-Schutzelement 31 anliegende Spannung in Abhängigkeit von der Eingangsspannung ohne (Kurve 8) und mit (Kurve 9) Vorhandensein des Leckstrompfades 4 dargestellt. Ab einer Eingangsspannung von etwa 4V wird die an dem NMOS-Schutzelement anliegende Spannung um etwa 1V, was den Diodenschwellen der beiden ESD-Dioden 32 entspricht, reduziert, so dass hier bei den hohen, potentiell schädlichen Eingangsspannungen eine Reduzierung der Spannung gewährleistet ist.

In Figur 4C ist der Leckstrom über den Strompfad 4 in Abhängigkeit von der Eingangsspannung dargestellt (Kurve 10). Ein merklicher Leckstrom setzt hier erst für Eingangsspannungen über 4V ein, der Leckstrom steigt bis zu einer Eingangsspannung von 6V auf etwa 7µA an, ist also wesentlich kleiner als in dem in Figur 2 gezeigten Ausführungsbeispiel. Dies zeigt, dass durch eine derartige Ansteuerungsschaltung mit einem PMOS-Bauelement 43 der Leckstrom wirksam reduziert werden kann.

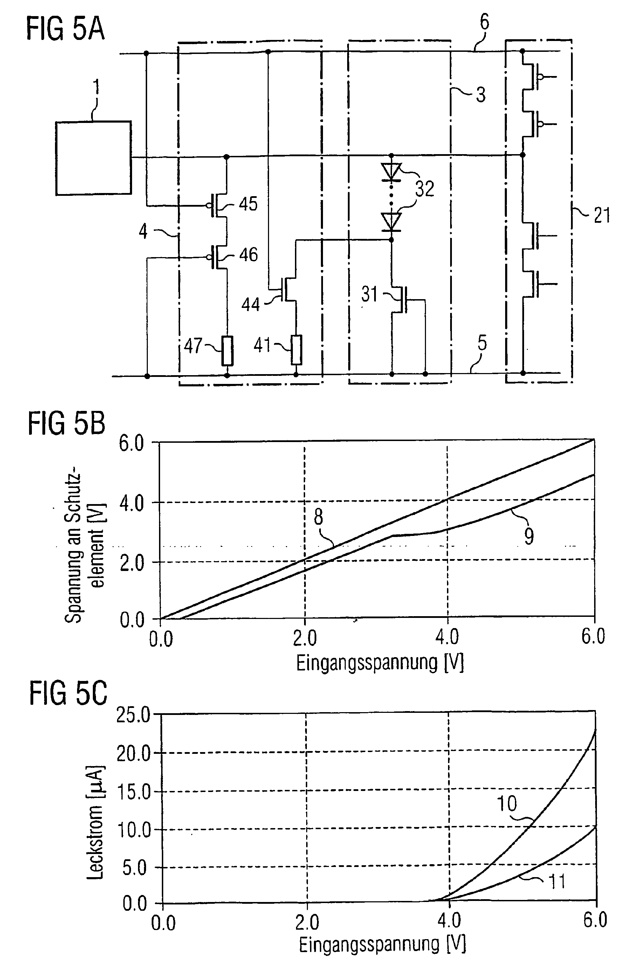

In Figur 5A ist ein drittes erfindungsgemäßes Ausführungsbeispiel dargestellt. Im Vergleich zu den in den Figuren 2A und 4A dargestellten Ausführungsbeispielen wurde lediglich der Strompfad 4 geändert, die übrige Schaltungsanordnung ist unverändert. Insbesondere liegt im Vergleich zu der in Figur 4A gezeigten Schaltungsanordnung nun eine zusätzliche Ansteuerungsschaltung, bestehend aus PMOS-Elementen 45 und 46, für den NMOS-Transistor 44 vor. Zur Begrenzung des Leckstromes ist ein zusätzlicher Widerstand 47 vorhanden. Für die Durchführung der Simulation dieser Schaltung betrugen die Widerstände 41 und 47 jeweils 10kΩ.

In Figur 5B ist der Spannungsabfall an dem NMOS-Schutzelement 31 in Abhängigkeit von der am Anschluss 1 anliegenden Eingangsspannung dargestellt. Kurve 8 stellt dabei den Spannungsabfall ohne Strompfad 4, Kurve 9 den Spannungsabfall mit Strompfad 4 dar. Durch Vorhandensein des Strompfades 4 mit einer zweistufigen Ansteuerungsschaltung wird der Spannungsabfall am NMOS-Schutzelement 31 im Vergleich zu Figur 4B schon für Eingangsspannungen kleiner als 4V wirksam reduziert, so dass beispielsweise bei 4V Eingangsspannung die am NMOS-Schutzelement 31 abfallende Spannung nur etwa 3V beträgt.

In Figur 4C ist sowohl der durch den Strompfad über den Widerstand 41 fließende Leckstrom (Kurve 10) als auch der über den Widerstand 47 fließende Strom (Kurve 11) in Abhängigkeit von der Eingangsspannung dargestellt. Bei einer Eingangsspannung von 6V betragen diese Ströme knapp 25µA bzw. etwa 10µA, sind also etwas größer als bei der in Figur 4 dargestellten Schaltungsanordnung, dafür wird, wie oben dargestellt, der Spannungsabfall am NMOS-Schutzelement schon bei kleineren Spannungen reduziert.

Abschließend sollte darauf hingewiesen werden, dass - obwohl die Erfindung zuvor anhand bevorzugter Ausführungsbeispiele mit in Serie mit dem ESD-Schutzelement 31 geschalteten ESD-Dioden 32 erläutert worden ist - grundsätzlich die Lösung der eingangs erläuterten Aufgabe auch ohne diese ESD-Dioden oder nur mit einer oder auch mehr als zwei ESD-Dioden möglich ist.

## Patentansprüche

1. Schaltungsanordnung zum Schutz einer integrierten Schaltung (2; 21) vor elektrostatischen Entladungen oder elektrischer Überbeanspruchung, wobei die Schaltungsanordnung mindestens ein erstes Schutzelement (31) umfasst, welches derart verschaltet ist, dass eine an einem Anschluss (1) der integrierten Schaltung (2; 21) auftretende elektrostatische Entladung über dieses mindestens eine erste Schutzelement (31) auf eine Versorgungsspannung (5) ableitbar ist,
wobei die Schaltungsanordnung zusätzlich mindestens ein weiteres Schutzelement (32) umfasst, welches zu dem mindestens einen ersten Schutzelement (31) in Serie geschaltet ist,
**dadurch gekennzeichnet,**
**dass** parallel zu dem mindestens einen ersten Schutzelement ein Strompfad (4) mit mindestens einem Strom begrenzenden Schaltungselement (41) geschaltet ist, und
**dass** die Schaltungsanordnung derart ausgestaltet ist, dass in einem Normalbetrieb der von der Schaltungsanordnung geschützten integrierten Schaltung, bei dem das mindestens eine erste Schutzelement (31) ein Sperrverhalten aufweist, ein begrenzter Strom durch den Strompfad und das mindestens eine weitere Schutzelement (32) fließt.

2. Schaltungsanordnung nach Anspruch 1,
**dadurch gekennzeichnet,**
**dass** das mindestens eine Schaltungselement (41) des Strompfades (4) einen Widerstand umfasst.

3. Schaltungsanordnung nach Anspruch 2,
**dadurch gekennzeichnet,**
**dass** der Widerstand einen Widerstand von mindestens 1kΩ aufweist.

4. Schaltungsanordnung nach einem der vorhergehenden Ansprüche,
**dadurch gekennzeichnet,**
**dass** der Strompfad (4) mindestens eine Diode (42) umfasst.

5. Schaltungsanordnung nach einem der vorhergehenden Ansprüche,
**dadurch gekennzeichnet,**
**dass** der Strompfad zu- und abschaltbar ausgestaltet ist.

6. Schaltungsanordnung nach Anspruch 5,
**dadurch gekennzeichnet,**
**dass** das Zu- oder Abschalten des Strompfades durch ein in dem Strompfad enthaltenes elektronisch steuerbares Schaltmittel (43; 44) erfolgt.

7. Schaltungsanordnung nach Anspruch 6,
**dadurch gekennzeichnet,**
**dass** die Schaltungsanordnung eine Ansteuerschaltung zur Steuerung des elektronisch steuerbaren Schaltmittels (43;44) umfasst.

8. Schaltungsanordnung nach Anspruch 7,
**dadurch gekennzeichnet,**
**dass** die Ansteuerschaltung einen ersten und einen zweiten Transistor umfasst,
wobei der erste Transistor zwischen den Anschluss (1) der integrierten Schaltung und einen Steuereingang des elektronisch steuerbaren Schaltmittels (43; 44) geschaltet ist und der zweite Transistor zwischen den Steuereingang des elektronisch steuerbaren Schaltmittels (43;44) und die Versorgungsspannung (5) geschaltet ist.

9. Schaltungsanordnung nach einem der Ansprüche 5 bis 8,
**dadurch gekennzeichnet,**
**dass** die Schaltungsanordnung derart ausgestaltet ist, dass der Strompfad (4) zugeschaltet wird, wenn eine an dem Anschluss (1) der integrierten Schaltung (2; 21) anliegende Spannung einen vorgegebenen Wert überschreitet.

10. Schaltungsanordnung nach einem der vorhergehenden Ansprüche,
**dadurch gekennzeichnet,**
**dass** das mindestens eine weitere Schutzelement (32) mindestens eine Diode umfasst.

11. Schaltungsanordnung nach einem der vorhergehenden Ansprüche,
**dadurch gekennzeichnet,**
**dass** das mindestens eine erste Schutzelement (31) ein NMOS- oder PMOS- basiertes Schutzelement, einen Bipolartransistor oder einen Thyristor umfasst.

12. Integrierte Schaltung, welche mindestens eine Schaltungsanordnung nach einem der Ansprüche 1-11 umfasst.

## Claims

1. Circuit arrangement for protecting an integrated circuit (2; 21) against electrostatic discharges or electrical overstress, the circuit arrangement comprising at least one first protection element (31) connected up in such a way that an electrostatic discharge occurring at a terminal (1) of the integrated circuit (2; 21) can be conducted away to a supply voltage (5) via said at least one first protection element (31), the circuit arrangement additionally comprising at least one further protection element (32) connected in series with the at least one first protection element (31),
**characterized**
**in that** a current path (4) having at least one current-limiting circuit element (41) is connected in parallel with the at least one first protection element, and
**in that** the circuit arrangement is configured in such a way that, in a normal operating mode of the integrated circuit protected by the circuit arrangement, the at least one first protection element (31) having a blocking behaviour in said normal operating mode, a limited current flows through the current path and the at least one further protection element (32).

2. Circuit arrangement according to Claim 1,
**characterized**
**in that** the at least one circuit element (41) of the current path (4) comprises a resistor.

3. Circuit arrangement according to Claim 2,
**characterized**
**in that** the resistor has a resistance of at least 1 kΩ.

4. Circuit arrangement according to any of the preceding claims,
**characterized**
**in that** the current path (4) comprises at least one diode (42).

5. Circuit arrangement according to any of the preceding claims,
**characterized**
**in that** the current path is configured in a connectable and disconnectable fashion.

6. Circuit arrangement according to Claim 5,
**characterized**
**in that** the connection or disconnection of the current path is effected by an electronically controllable switching means (43; 44), contained in the current path.

7. Circuit arrangement according to Claim 6,
**characterized**
**in that** the circuit arrangement comprises a drive circuit for controlling the electronically controllable switching means (43; 44).

8. Circuit arrangement according to Claim 7,
**characterized**
**in that** the drive circuit comprises a first and a second transistor,
the first transistor being connected between the terminal (1) of the integrated circuit and a control input of the electronically controllable switching means (43; 44), and the second transistor being connected between the control input of the electronically controllable switching means (43; 44) and the supply voltage (5).

9. Circuit arrangement according to any of Claims 5 to 8,
**characterized**
**in that** the circuit arrangement is configured in such a way that the current path (4) is connected if a voltage present at the terminal (1) of the integrated circuit (2; 21) exceeds a predefined value.

10. Circuit arrangement according to any of the preceding claims,
**characterized**
**in that** the at least one further protection element (32) comprises at least one diode.

11. Circuit arrangement according to any of the preceding claims,
**characterized**
**in that** the at least one first protection element (31) comprises an NMOS- or PMOS-based protection element, a bipolar transistor or a thyristor.

12. Integrated circuit, comprising at least one circuit arrangement according to any of Claims 1-11.

## Revendications

1. Montage servant à protéger un circuit (2 ; 21) intégré de décharges électrostatiques ou de surcharges électriques, le montage comprenant au moins un premier élément (31) de protection, qui est connecté de façon à ce qu'une décharge électrostatique se produisant à une borne (1) du circuit (2 ; 21) intégré puisse être dérivée par cet au moins un premier élément (31) de protection sur une tension (5) d'alimentation, le montage comprenant en outre au moins un autre élément (32) de protection, qui est monté en série avec le au moins un premier élément (31) de protection,
**caractérisé**
**en ce qu'**un trajet (4) de courant, ayant au moins un élément (41) de circuit limitant le courant, est monté en parallèle avec le au moins un premier élément de protection et,
**en ce que** le montage et tel que dans un fonctionnement normal du circuit intégré protégé par le montage, dans lequel le au moins un premier élément (31) de protection a une caractéristique de blocage, un courant limité passe dans le trajet de courant et dans le au moins un autre élément (32) de protection.

2. Montage suivant la revendication 1,
**caractérisé**
**en ce que** le au moins un élément (41) de circuit du trajet (4) de courant comprend une résistance.

3. Montage suivant la revendication 2,
**caractérisé**
**en ce que** la résistance a une valeur d'au moins 1kΩ.

4. Montage suivant l'une des revendications précédentes,
**caractérisé**
**en ce que** le trajet (4) de courant comprend au moins une diode (42).

5. Montage suivant l'une des revendications précédentes,
**caractérisé**
**en ce que** le trajet de courant est constitué de manière à pouvoir être mis en circuit et hors circuit.

6. Montage suivant la revendication 5,
**caractérisé**
**en ce que** la mise en circuit ou hors circuit du trajet de courant s'effectue par un moyen (43 ; 44) d'interruption contenu dans le trajet de courant et pouvant être commandé électroniquement.

7. Montage suivant la revendication 6,
**caractérisé**
**en ce que** le montage comprend un circuit de commande, pour commander le moyen (43 ; 44) d'interruption pouvant être commandé électroniquement.

8. Montage suivant la revendication 7,
**caractérisé**
**en ce que** le circuit de commande comprend un premier et un deuxième transistors,
dans lequel le premier transistor est monté entre la borne (1) du circuit intégré et l'entrée de commande du moyen (43 ; 44) d'interruption pouvant être commandé électroniquement
et le deuxième transistor est monté entre l'entrée de commande du moyen (43 ; 44) d'interruption pouvant être commandé électroniquement et la tension (5) d'alimentation.

9. Montage suivant l'une des revendications 5 à 8,
**caractérisé**
**en ce que** le montage est tel que le trajet (4) de courant est mis en circuit, lorsqu'une tension appliquée à la borne (1) du circuit (2 ; 21) intégré dépasse une valeur prescrite.

10. Montage suivant l'une des revendications précédentes,
**caractérisé**
**en ce que** le au moins un autre élément (32) de protection comprend au moins une diode.

11. Montage suivant l'une des revendications précédentes,
**caractérisé**
**en ce que** le au moins un premier élément (31) de protection comprend un élément de protection à base d'un NMOS ou d'un PMOS, un transistor bipolaire ou un thyristor.

12. Circuit intégré qui comprend au moins un montage suivant l'une des revendications 1 à 11.
